# EUROPEAN PATENT APPLICATION

(11) **EP 3 306 893 A1**
(43) Date of publication of application: **11.04.2018**
(21) Application number: 15893120.4
(22) Date of filing: 10.11.2015
(51) Int. Cl.: H04L 29/08

(54) **APPLICATION CONTROL METHOD AND SYSTEM**

(30) Priority: 26.05.2015 CN 201510274717
(71) Applicant: ZTE Corporation, Shenzhen, Guangdong 518057 (CN)
(72) Inventor: GAO, Yang, Shenzhen Guangdong 518057 (CN); CAI, Kai, Shenzhen Guangdong 518057 (CN)
(74) Representative: Studio Torta S.p.A.
(86) International application number: PCT/CN2015/094210
(87) International publication number: WO 2016/188045

(57) **Abstract**

Disclosed are an application control method and system. The method comprises: establishing, by a first communication terminal and via a register server, a signaling plane with a second communication terminal by utilizing an obtained media description of a first device, wherein the first device is a control device or a controlled device; and obtaining, by the first device and a second device and via a calling process, media descriptions of the other parties, and establishing a control channel, wherein the second device is a controlled device when the first device is the control device, and the second device is a control device when the first device is the controlled device.

## Description

### TECHNICAL FIELD

The present application relates to, but is not limited to, the field of multimedia communication.

### BACKGROUND

Multimedia communication has always been the pursuit of the communication field, and is improved constantly. Under the background of 4G, voice over LTE (VoLTE, Voice over LTE) or rich communication suit (RCS, Rich Communication Suit) and other technologies have brought a window of opportunity for mobile users to popularize multimedia communication.

Even though current user equipment (UE), such as a mobile phone and particularly a smart phone, has been popularized with the capacities of front cameras and video streams, i.e., the capacity of implementing video calls on the UE, large-screen and high-definition multimedia communication cannot be experienced yet due to the hardware equipment limitation and multimedia capacity limitation of a mobile device.

From a future perspective, the capacity of multimedia communication, for example, communication supporting holographic projection, is far from being built or carried by a simple mobile device.

At present, the concepts of industrial control, such as Internet of Things and smart home, have been proposed. However, based on the current application states of the industrial control, the smart home and the like, each device needs to have an external identity (ID) as an identity for direct communication. In this way, the user needs to manage and remember these IDs, which is very difficult for the user. This is also one of the reasons why the applications of the industrial control and smart home cannot be promoted in a large scale in the background of mature network technique.

### SUMMARY

The following is a summary of the subject described in detail herein. This summary is not intended to limit the protection scope of the claims.

The present disclosure provides a method and system for implementing application control, which can simply control applications like industrial control and smart home based on the idea of control and media separation.

The method for implementing application control includes:
establishing, by a first communication terminal, a signaling plane with a second communication terminal via a register server by using obtained media description information of a first device, wherein the first device is a control device or a controlled device; and
acquiring, by the first device, media description information of a second device via a calling process, and acquiring, by the second device, media description information of the first device via the calling process, to establish a control channel between the first device and the second device;
wherein when the first device is the control device, the second device is the controlled device; and when the first device is the controlled device, the second device is the control device.

Optionally, before the establishing, by the first communication terminal, the signaling plane with the second communication terminal via the register server by using the obtained media description information of the first device, the method further includes:
when needing to establish a call control, initiating, by the first communication terminal, a query request to the first device and obtaining the media description information of the first device.

Optionally, the establishing, by the first communication terminal, the signaling plane with another communication terminal via the register server by using the obtained media description information of the first device, includes:
initiating, by the first communication terminal, a call request to the second communication terminal via the register server by using the obtained media description information of the first device; and
receiving, by the first communication terminal, a call answer carrying the media description information of the second device returned from the second communication terminal via the register server.

Optionally, the call request carries a media plane description of the first communication terminal; and the method further includes: establishing a media plane between the first communication terminal and the second communication terminal.

Optionally, the established media plane includes at least one media stream.

Optionally, a number of the first communication terminal is at least one, and accordingly, a number of the first device and a number of the second device are at least one.

The system for implementing application control includes: a first device and a second device serving as converged devices, a first communication terminal, a second communication terminal, and a register server; wherein the first device is a control device or a controlled device, when the first device is the control device, the second device is the controlled device; and when the first device is the controlled device, the second device is the control device; wherein
the first communication terminal is configured to: initiate a call request to the register server by using media description information from the first device; receive a call answer, and send media description information of the second device to the first device; and establish a signaling plane with the second communication terminal;
the second communication terminal is configured to: receive the call request sent by the first communication terminal via the register server, and send a call answer carrying the media description information of the second device to the first communication terminal via the register server; and establish the signaling plane with the first communication terminal;
the first device is configured to: send the media description information to the first communication terminal, and receive the media description information of the second device fed back by the first communication terminal; establish a control channel with the second device to control the controlled device; control the second device when the first device is the control device; and receive control from the second device when the first device is the controlled device;
the second device is configured to: send media description information to the second communication terminal; establish the control channel with the first device; control the first device when the second device is the control device; and receive control from the first device when the second device is the controlled device; and
the register server is configured to: receive the call request, notify the second communication terminal and forward a call answer carrying the media description information of the second device from the second communication terminal to the first communication terminal.

Optionally, the first communication terminal and the second communication terminal control the first device and the second device serving as converged devices through a control interface.

Optionally, a number of the first communication terminal is at least one, and accordingly, a number of the first device and a number of the second device are at least one.

Optionally, the control device is integrated with the first communication terminal or the second communication terminal in one module;
or, the control device serves as an independent module, and exists in same user equipment with the first communication terminal or the second communication terminal;
or, the control device serves as a device independent of the first communication terminal and the second communication terminal.

A computer-readable storage medium stores a computer-executable instruction, wherein the computer-executable instruction is configured to execute any one of the methods mentioned above.

According to the embodiments of the present disclosure, the control device and the controlled device are used as the converged devices of user equipment. In this way, a communication ID of the user equipment is used as the communication identity, while the control device and the controlled device are used as secondary indexes of the communication ID of the user equipment. Therefore, universal authentication and routing on the remote control of the controlled device are achieved through a communication network. Moreover, the user does not need to manage and memorize the IDs of the controlled devices by uniformly using the communication ID of the user equipment for routing. The relationship between the user equipment of the user and the controlled device can be dynamically established, which brings mobility to control the applications like industrial control (Internet of Things), smart home, etc.

Other aspects will become apparent upon reading and understanding the drawings and detailed description.

### BRIEF DESCRIPTION OF THE DRAWINGS

Fig. 1 is a schematic diagram of an architecture for implementing multimedia communication;
Fig. 2 is a schematic diagram of a composition structure of a system for implementing application control according to an embodiment of the present disclosure;
Fig. 3 is a flow chart of a method for implementing application control according to an embodiment of the present disclosure;
Fig. 4 is a flow diagram of a first embodiment for implementing application control according to the present disclosure;
Fig. 5 is a flow diagram of a second embodiment for implementing application control according to the present disclosure;
Fig. 6 is a flow diagram of an embodiment applied to control a smart air conditioner according to the present disclosure;
Fig. 7 is a flow diagram of an embodiment applied to control a monitoring probe according to the present disclosure;
Fig. 8 is a flow diagram of an embodiment applied to remote diagnosis according to the present disclosure;
Fig. 9 is a flow diagram of a third embodiment for implementing application control according to the present disclosure; and
Fig. 10 is a flow diagram of an embodiment applied to remote housekeeping according to the present disclosure.

### DETAILED DESCRIPTION

The embodiments of the present disclosure will be described in detail hereinafter with reference to the accompanying drawings. It should be noted that, in case of no conflict, the embodiments in the present application and the features in the embodiments may be arbitrarily combined with each other.

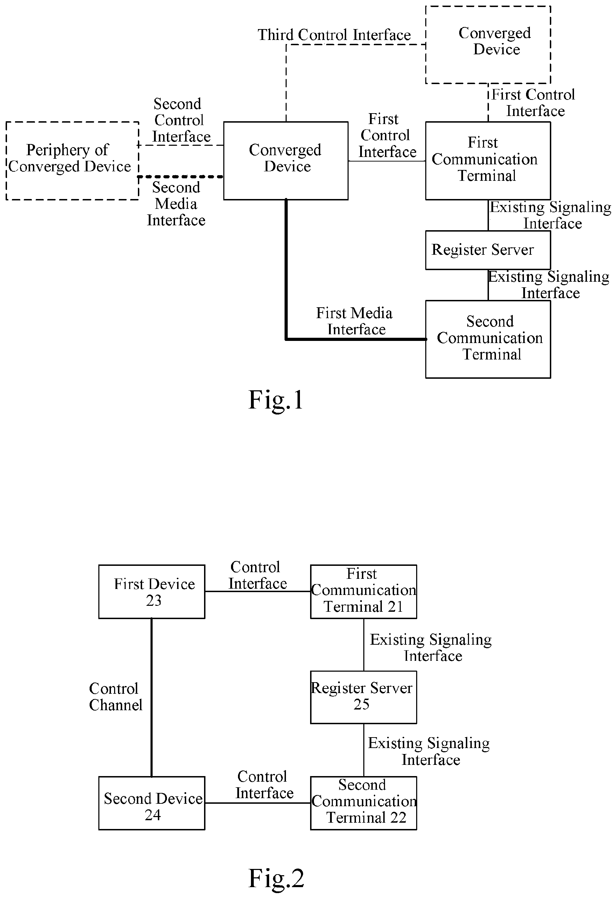

Fig. 1 is a schematic diagram of an architecture for implementing multimedia communication.

As shown in Fig. 1, the architecture includes a first communication terminal, a second communication terminal, a converged device and a register server.

The first communication terminal is a terminal-type user equipment having a communication capacity, i.e.., UE, such as a smart phone, a tablet like Pad, a laptop computer or other user smart equipment, which is configured to control the converged device through a first control interface, for example, to transfer media description information. A signaling may be carried in multiple network connections like bluetooth, WLAN and NFC between the first communication terminal and an external device.

The converged device may be either a device which has a multimedia capability, a near-field communication capacity and a remote communication capacity at the same time, or a device which has a multimedia capability and a near-field communication capacity, but does not have a remote communication capacity; at this moment, the converged device may be disposed in the user equipment as a functional unit. The converged devices are connected via a third control interface.

The register server is configured to: receive registration from the first communication terminal and second communication terminal, and take charge of functions like authentication and routing.

The second communication terminal is a UE or a media server, which is generally connected with the first communication terminal via the register server by using an existing signaling interface of the communication system. If the communication system is established by using an IMS (Internet Protocol Multimedia System), then a control signaling may pass a register server of the IMS, for example, a call session control function (CSCF, Call Session Control Function).

Fig. 2 is a schematic diagram of a composition structure of a system for implementing application control according to an embodiment of the present disclosure. The system includes: a first device 23 and a second device 24 serving as converged devices of the architecture as shown in Fig. 1, a first communication terminal 21, a second communication terminal 22, and a register server 25. The first device 23 is a control device or a controlled device. When the first device 23 is the control device, the second device 24 is the controlled device; and when the first device 23 is the controlled device, the second device 24 is the control device.

The first communication terminal 21 is configured to: initiate a call request to the register server 25 by using media description information from the first device 23; receive a call answer, and send media description information of the second device 24 to the first device 23; and establish a signaling plane with the second communication terminal 22.

The second communication terminal 22 is configured to: receive the call request sent by the first communication terminal 21 via the register server 25, and send a call answer carrying the media description information of the second device 24 to the first communication terminal 21 via the register server 25; and establish a signaling plane with the first communication terminal 21.

The first device 23 is configured to: send media description information to the first communication terminal 21, and receive the media description information of the second device 24 fed back by the first communication terminal 21; establish a control channel with the second device 24; control the second device 24 when the first device 23 is the control device; and receive control from the second device 24 when the first device 23 is the controlled device.

The second device 24 is configured to: send media description information to the second communication terminal 22; establish a control channel with the first device 21; control the first device when the second device is the control device; and receive control from the first device when the second device is the controlled device.

The register server 25 is configured to: receive the call request, notify the second communication terminal 22 and forward a call answer carrying the media description information of the second device 24 from the second communication terminal 22 to the first communication terminal 21.

The control may include, but is not limited to: control on smart home such as a smart air conditioner, a smart kitchen, a monitoring probe, etc.

The first communication terminal 21 and the second communication terminal 22 control the first device 23 and the second device 24 serving as converged devices through control interfaces, for example, to transfer media description information. A signaling may be carried in multiple network connections like bluetooth, WLAN and NFC between the first communication terminal 21 or the second communication terminal 22 and an external device.

In the application control system of the embodiment of the present disclosure as shown in Fig. 2, the number of the first communication terminal 21 may be one or more, and then the number of the first device 23 and the second device 24 may be one or more, so as to control different controlled devices at the same time.

According to the system for implementing application control provided by the embodiment of the present disclosure, the control device and the controlled device are used as the converged devices of the user equipment. In this way, the communication ID of the user equipment is used as a communication identity, while the control device and the controlled device are used as secondary indexes of the communication ID of the user equipment. Therefore, universal authentication and routing on the remote control of the controlled device are achieved through a communication network. Moreover, the user does not need to manage and memorize the IDs of the controlled devices by uniformly using the communication ID of the user equipment for routing.

A relationship between the user equipment of the user and the controlled device may be dynamically established, which brings mobility to control the applications like industrial control (Internet of Things), smart home, etc. For example, user equipment having a device ID of Zhang San may be used to route to a smart air conditioner of Zhang San and control the smart air conditioner, while the smart air conditioner of Zhang San may either be a smart air conditioner at the home of Zhang San, or a smart air conditioner in an accommodation hotel of Zhang San when traveling.

The control device may be integrated with the first communication terminal 21 (or the second communication terminal 22) in one module, and control interfaces of the control device are presented in the same module. This method may be used for standardized control of some general and simple devices.

Alternatively,
the control device may serve as an independent module, and coexist in the same user equipment (such as the mobile phone) with the first communication terminal 21 (or the second communication terminal 22). A communication device may display a list of control devices (and corresponding controlled devices) of the user on an interface. When the user needs to use a certain control device (and a corresponding controlled device), before selecting the corresponding control device to initiate a call, the first communication terminal 21 (or the second communication terminal 22) interacts with the control device, and acquires media surface description information (media description information of a control channel) through interaction. A control interface between the first communication terminal 21 (or the second communication terminal 22) and the control device may be carried using an inter-process communication manner. When the call is established, the user operates to control the controlled device on the interface of the control device. In this way, the control device may be provided by manufacturers of smart devices and smart hardware, for example, the control device is installed in the mobile phone of the user as an application (APP).

Alternatively,
the control device may serve as an independent device, and exist with the first communication terminal 21 (or the second communication terminal 22) like a UE as two devices. The first communication terminal 21 (or the second communication terminal 22) may display a list of the control devices of the user (and corresponding controlled devices) on the interface. When the user needs to use a certain control device (and the corresponding controlled device), before selecting the corresponding control device to initiate a call, the first communication terminal 21 (or the second communication terminal 22) interacts with the control device, and acquires the media surface description information (the media description information of the control channel) through interaction. The control interface between the first communication terminal 21 (or the second communication terminal 22) and the control device may be carried using NFC, bluetooth, WLAN, or the like. When the call is established, the user operates to control the controlled device on the control device.

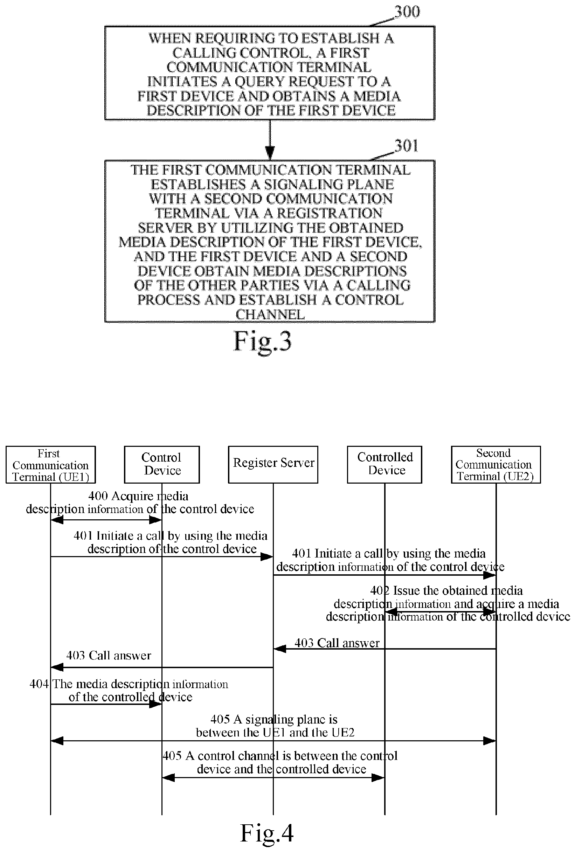

Fig. 3 is a flow chart of a method for implementing application control according to the embodiments of the present disclosure. As shown in Fig. 3, the method includes the follows steps.

In step 301, a first communication terminal establishes a signaling plane with a second communication terminal via a register server by using obtained media description information of a first device, and both the first device and a second device acquire media description information of each other via a calling process, and establish a control channel.

The first device is a control device or a controlled device. When the first device is the control device, the second device is the controlled device; and when the first device is the controlled device, the second device is the control device.

Before this step, the method further includes the following step.

In step 300, when a call control needs to be established, the first communication terminal initiates a query request to the first device and obtains media description information of the first device.

Step 301 includes:
the first communication terminal initiates a call request to the second communication terminal via the register server by using the obtained media description information of the first device; wherein, the call request may use a signaling such as an SIP, for example, an Invite message; and
the first communication terminal receives a call answer returned from the second communication terminal via the register server, such as 200OK, which may carry an SDP (if there is an intermediate message carrying an SDP Answer, then 200OK may not carry the SDP). The call answer may also be a call failure.

At this moment, a call is established between the first communication terminal and the second communication terminal, and the signaling plane is between the two communication terminals. A control channel is established between a converged device, and the control device and the controlled device at the communication terminals. In this way, the controlled device may be controlled by the control device via the control channel.

If media description information of the first communication terminal is carried in the call request at the same time, then after the call is established, the method further includes: establishing a media plane between the two communication terminals, for example, a voice media plane may be established between the two communication terminals at this moment.

The established media plane may include at least one media stream.

In the embodiments of the present disclosure, the first communication terminal is UE. The UE is a terminal-type user equipment having a communication capacity, such as a smart phone, a tablet like Pad, a laptop computer other user smart equipment.

The control device may be a remote control or the like. The controlled device may be a smart air conditioner, a smart monitor, a smart kitchen, an automobile supporting remote control, etc.

According to the method provided by the embodiment of the present disclosure, by separating the control and the media, applications like industrial control and smart home are simply controlled.

In the embodiments of the present disclosure, the first communication terminal converging the control device may be one or more; in this way, the control device serving as the converged device of the first communication terminal may be one or more, so as to control different controlled devices at the same time (at this moment, the second communication terminal is also converged with multiple controlled devices.

The embodiments of the present disclosure will be described in detail hereinafter.

Fig. 4 is a flow diagram of a first embodiment for implementing application control according to the present disclosure. As shown in Fig. 4, it is taken as an example in the first embodiment by that a first communication terminal (i.e., UE1) converged with a control device initiates a call to interact with the control device, which includes the following steps.

In step 400, the UE1 interacts with the control device to acquire media description information of the control device (i.e., a description of a control channel).

In step 401, the UE1 initiates a call request to a second communication terminal (i.e., UE2) via a register server by using the obtained media description information of the control device, wherein, a signaling such as an SIP may be used.

The initiated call request may also carry media description information of the UE1 at the same time.

In step 402, the UE2 interacts with a controlled device, sends the received media description information of the control device from the UE1 to the controlled device, and acquires media description information of the controlled device from the controlled device.

In step 403, The UE2 sends a call answer to the UE1 via the register server, wherein the call answer carries the media description information of the controlled device.

In step 404, the UE1 sends the received media description information of the controlled device from the UE2 to the control device.

In step 405, the call is established at the moment, wherein a signaling plane is established between the UE1 and the UE2, and the control channel (also called as a media plane) is established between the control device and the controlled device.

If the call request in step 401 also carries the media description information of the UE1 at the same time, then a media stream corresponding to this media description information is between the UE1 and the UE2, for example, a voice media plane is established between the UE1 and the UE2, etc.

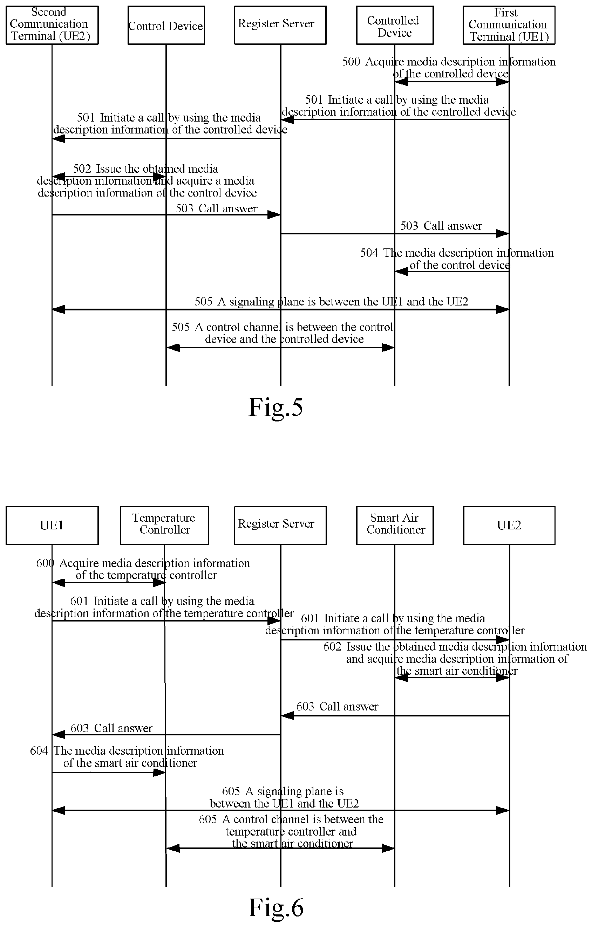

Fig. 5 is a flow diagram of a second embodiment for implementing application control according to the present disclosure. As shown in Fig. 5, it is taken an example in the second embodiment by that a first communication terminal (i.e., UE1) converged with a controlled device initiates a call to interact with the controlled device, which includes the following steps.

In step 500, the UE1 interacts with the controlled device to acquire media description information of the controlled device (i.e., a description of a control channel).

In step 501, the UE1 initiates a call to a second communication terminal (i.e., UE2) via a register server by using the obtained media description information of the controlled device, wherein, a signaling such as an SIP may be used.

The initiated call request may also carry media description information of the UE1 at the same time.

In step 502, the UE2 interacts with a control device, sends the received media description information of the controlled device from the UE1 to the control device, and acquires media description information of the control device from the control device.

In step 503, The UE2 sends a call answer to the UE2 via the register server, wherein the call answer carries the media description information of the control device.

In step 504, the UE1 sends the received media description information of the control device from the UE1 to the controlled device.

In step 505, the call is established at the moment, wherein a signaling plane is established between the UE1 and the UE2, and a control channel (also called as a media plane) is established between the control device and the controlled device.

If the call request in step 501 also carries the media description information of the UE1 at the same time, then a media stream corresponding to this media description information is between the UE1 and the UE2, for example, a voice media plane is established between the UE1 and the UE2, etc.

Fig. 6 is a flow diagram of an embodiment applied to control a smart air conditioner according to the present disclosure. In the embodiment, remote control on the smart air conditioner is taken as an example to describe the implementation of the embodiment of the present disclosure. In the embodiment, the control device is a temperature controller, and the controlled device is a smart air conditioner. As shown in Fig. 6, the method includes the following steps.

In step 600, a UE1 interacts with the temperature controller to acquire media description information of the temperature controller (i.e., a description of a control channel).

In step 601, the UE1 initiates a call request to a UE2 via a register server by using the obtained media description information of the temperature controller, wherein, a signaling such as an SIP may be used.

The initiated call request may also carry media description information of the UE1 at the same time.

In step 602, the UE2 interacts with the smart air conditioner, sends the received media description information of the temperature controller from the UE1 to the smart air conditioner, and acquires media description information of the smart air conditioner.

In step 603, the UE2 sends a call answer to the UE1 via the register server, wherein the call answer carries the media description information of the smart air conditioner.

In step 604, the UE1 sends the received media description information of the smart air conditioner from the UE2 to the temperature controller.

In step 605, the call is established at the moment, wherein a signaling plane is established between the UE1 and the UE2, and a control channel (also called as a media plane) is established between the temperature controller and the smart air conditioner.

In this way, the smart air conditioner may be controlled by the temperature controller via the established control channel.

If the call request in step 601 also carries the media description information of the UE1 at the same time, then a media stream corresponding to this media description information is between the UE1 and the UE2, for example, a voice media plane is established between the UE1 and the UE2, etc.

In the embodiment, the UE2 may move, for example, in a hotel during travelling, the UE2 is paired with a smart air conditioner in the hotel, so that the smart air conditioner of the hotel becomes a converged device of the UE2. In this way, a user of the UE1, such as a family member of a user of the UE2, may control the smart air conditioner at home by establishing a call, so as to adjust the smart air conditioner to an appropriate temperature and prevent the user of the UE2 from catching a cold.

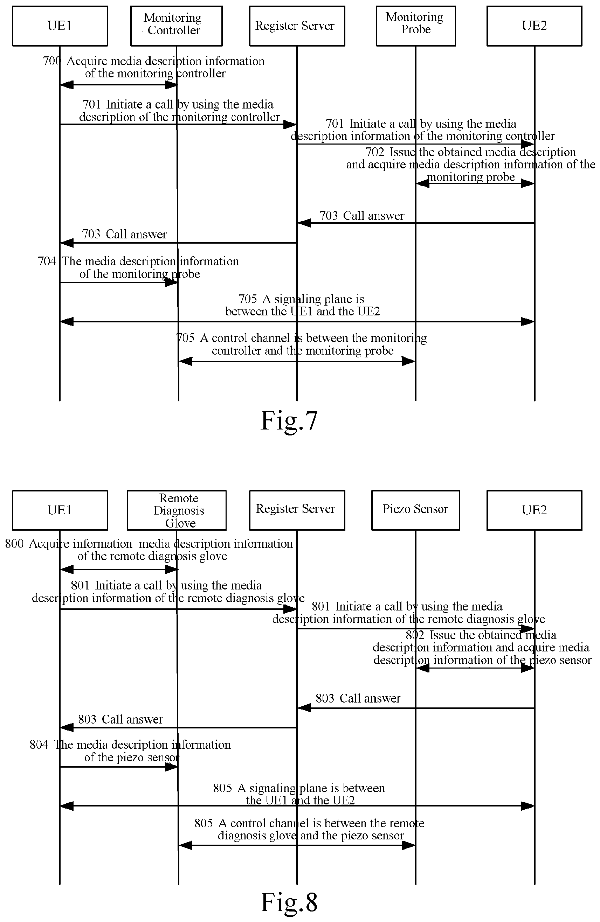

Fig. 7 is a flow diagram of an embodiment applied to control a monitoring probe according to the present disclosure. In the embodiment, remote control on the monitoring probe is taken as an example to describe the implementation of the embodiment of the present disclosure. In the embodiment, the control device is a monitoring controller, and the controlled device is the monitoring probe. As shown in Fig. 7, the method includes the following steps.

In step 700, a UE1 interacts with the monitoring controller to acquire media description information of the monitoring controller (i.e., a description of a control channel).

In step 701, the UE1 initiates a call request to a UE2 via a register server by using the obtained media description information of the monitoring controller, wherein, a signaling such as an SIP may be used.

The initiated call request may also carry media description information of the UE1 at the same time.

In step 702, the UE2 interacts with the monitoring probe, sends the received media description information of the monitoring controller from the UE1 to the monitoring probe, and acquires media description information of the monitoring probe.

In step 703, the UE2 sends a call answer to the UE1 via the register server, wherein the call answer carries the media description information of the monitoring probe.

In step 704, the UE1 sends the received media description information of the monitoring probe from the UE2 to the monitoring controller.

In step 705, the call is established at the moment, wherein a signaling plane is established between the UE1 and the UE2, and a control channel (also called as a media plane) is established between the monitoring controller and the monitoring probe.

In this way, the monitoring probe may be controlled by the monitoring controller via the established control channel.

If the call request in step 701 also carries the media description information of the UE1 at the same time, then a media stream corresponding to this media description information is between the UE1 and the UE2, for example, a voice media plane is established between the UE1 and the UE2, etc.

Fig. 8 is a flow diagram of an embodiment applied to remote diagnosis according to the present disclosure. In the embodiment, it is taken as an example by that a doctor remotely controls a piezo sensor via a remote diagnosis glove to diagnose a patient, so as to describe the embodiment of the present disclosure. In the embodiment, the remote diagnosis glove is a control device, and the piezo sensor is a controlled device. A UE1 is a user equipment of the doctor, and a UE2 is a user equipment of the patient. As shown in Fig. 8, the method includes the following steps.

In step 800, the UE1 interacts with the remote diagnosis glove to acquire media description information of the remote diagnosis glove (i.e., a description of a control channel).

In step 801, the UE1 initiates a call to a UE2 via a register server by using the obtained media description information of the remote diagnosis glove, wherein, a signaling such as an SIP may be used.

The initiated call request may also carry media description information of the UE1 at the same time.

In step 802, the UE2 interacts with the piezo sensor, sends the received media description information of the remote diagnosis glove from the UE1 to the piezo sensor, and acquires media description information of the piezo sensor.

In step 803, the UE2 sends a call answer to the UE1 via the register server, wherein the call answer carries the media description information of the piezo sensor.

In step 804, the UE1 issues the received media description information of the piezo sensor from the UE2 to the remote diagnosis glove.

In step 805, the call is established at the moment, wherein a signaling plane is established between the UE1 and the UE2, and a control channel (also called as a media plane) is established between the remote diagnosis glove and the piezo sensor.

In this way, the remote diagnosis glove may control the remote diagnosis glove via the established control channel, so as to diagnose the patient.

If the call request in step 701 also carries the media description information of the UE1 at the same time, then a media stream corresponding to this media description information is between the UE1 and the UE2, for example, a voice media plane is established between the UE1 and the UE2, etc.

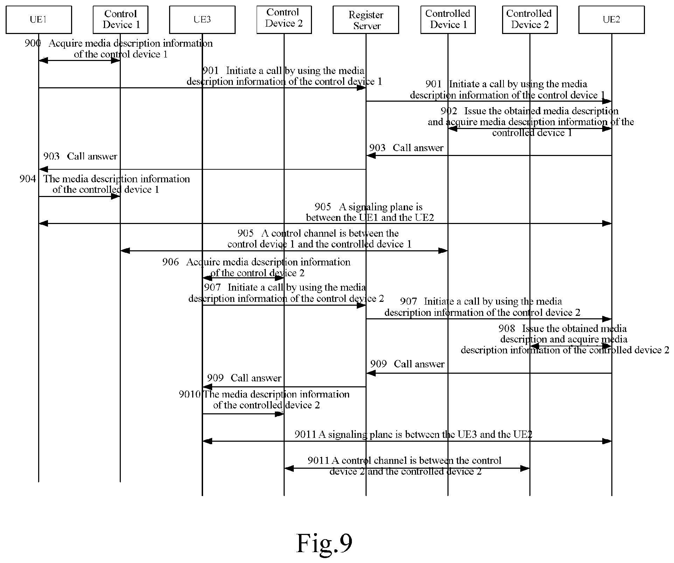

Fig. 9 is a flow diagram of a third embodiment for implementing application control according to the present disclosure. In the third embodiment, an implementation manner in which multiple control devices and multiple controlled devices participate in the control simultaneously is adopted. As shown in Fig. 9, the method includes the following steps.

In step 900, a UE1 interacts with a control device 1 to acquire media description information of the control device 1 (i.e., a description of a control channel).

In step 901, the UE1 initiates a call request to a second communication terminal (i.e., UE2) via a register server by using the obtained media description information of the control device 1, wherein, a signaling such as an SIP may be used.

The initiated call request may also carry media description information of the UE1 at the same time.

In step 902, the UE2 interacts with a controlled device 1, sends the received media description information of the control device 1 from the UE1 to the controlled device 1, and acquires media description information of the controlled device 1 from the controlled device 1.

In step 903, the UE2 sends a call answer to the UE1 via the register server, wherein the call answer carries the media description information of the controlled device 1.

In step 904, the UE1 sends the received media description information of the controlled device 1 from the UE2 to the control device 1.

In step 905, the call is established at the moment, wherein a signaling plane is established between the UE1 and the UE2, and a control channel (also called as a media plane) is established between the control device 1 and the controlled device 1.

If the call request in step 901 also carries the media description information of the UE1 at the same time, then a media stream corresponding to this media description information is between the UE1 and the UE2, for example, a voice media plane is established between the UE1 and the UE2, etc.

In step 906, provided that a control device 2 needs to control a controlled device 2 at this moment, then, a UE3 interacts with the control device 2 to acquire media description information of the control device 2 (i.e., a description of a control channel).

In step 907, the UE3 initiates a call request to the UE2 via a register server by using the obtained media description information of the control device 2, wherein, a signaling such as an SIP may be used).

The initiated call request may also carry media description information of the UE3 at the same time.

In step 908, the UE2 interacts with the controlled device 2, sends the received media description information of the control device 2 from the UE3 to the controlled device 2, and acquires media description information of the controlled device 2 from the controlled device 2.

In step 909, the UE2 sends a call answer to the UE3 via the register server, wherein the call answer carries the media description information of the controlled device 2.

In step 910, the UE3 sends the received media description information of the controlled device 2 from the UE2 to the control device 2.

In step 911, the call is established at the moment, wherein a signaling plane is established between the UE3 and the UE2, and a control channel (also called as a media plane) is established between the control device 2 and the controlled device 2.

If the call request in step 907 also carries the media description information of the UE3 at the same time, then a media stream corresponding to this media description information is between the UE3 and the UE2, for example, a voice media plane is established between the UE3 and the UE2, etc.

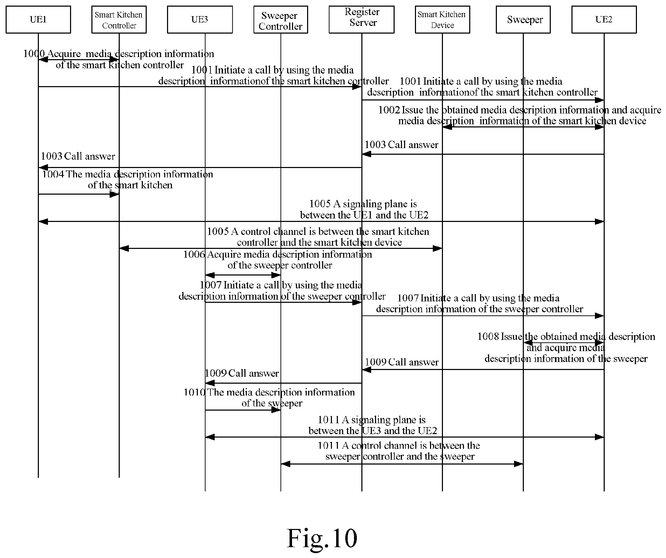

Fig. 10 is a flow diagram of an embodiment applied to remote housekeeping according to the present disclosure. In this embodiment, an implementation manner in which multiple housekeeping personnel control different devices via different control devices is adopted. In the embodiment, the control devices include a smart kitchen controller and a sweeper controller, and the controlled devices include smart kitchen devices such as a rice cooker and a sweeper, a UE1 is user equipment of a housekeeping personnel A, UE3 is user equipment of a housekeeping personnel B, UE2 is user equipment that converges the smart kitchen device and the sweeper. As shown in Fig. 10, the method includes the following steps.

In step 1000, the UE1 interacts with the smart kitchen controller to acquire media description information of the smart kitchen controller (i.e., a description of a control channel).

In step 1001, the UE1 initiates a call request to the UE2 via a register server by using the obtained media description information of the smart kitchen controller, wherein, a signaling such as an SIP may be used.

The initiated call request may also carry media description information of the UE1 at the same time.

In step 1002, the UE2 interacts with the smart kitchen device such as the rice cooker, sends the received media description information of the smart kitchen controller from the UE1 to the smart kitchen device, and acquires media description information of the smart kitchen device.

In step 1003, the UE2 sends a call answer to the UE1 via the register server, wherein the call answer carries the media description information of the smart kitchen device.

In step 1004, the UE1 sends the received media description information of the smart kitchen device from the UE2 to the smart kitchen controller.

In step 1005, the call is established at the moment, wherein a signaling plane is established between the UE1 and the UE2, and a control channel (also called as a media plane) is established between the smart kitchen controller and the smart kitchen device.

In this way, the housekeeping personnel A can achieve remote cooking such as cooking rice.

If the call request in step 1001 also carries the media description information of the UE1 at the same time, then a media stream corresponding to this media description information is between the UE1 and the UE2, for example, a voice media plane is established between the UE1 and the UE2, etc.

In step 1006, the UE3 interacts with the sweeper controller to acquire media description information of the sweeper controller (i.e., a description of a control channel).

In step 1007, the UE3 initiates a call request to the UE2 via a register server by using the obtained media description information of the sweeper controller, wherein, a signaling such as an SIP may be used).

The initiated call request may also carry media description information of the UE3 at the same time.

In step 1008, the UE2 interacts with the sweeper, sends the received media description information of the sweeper controller from the UE3 to the sweeper, and acquires media description information of the sweeper.

In step 1009, the UE2 sends a call answer to the UE3 via the register server, wherein the call answer carries the media description information of the sweeper.

In step 1010, the UE3 sends the received media description information of the sweeper from the UE2 to the sweeper controller.

In step 1011, the call is established at the moment, wherein a signaling plane is established between the UE3 and the UE2, and a control channel (also called as a media plane) is established between the sweeper controller and the sweeper.

If the call request in step 1007 also carries the media description information of the UE3 at the same time, then a media stream corresponding to this media description information is between the UE3 and the UE2, for example, a voice media plane is established between the UE3 and the UE2, etc.

Those having ordinary skills in the art may understand that all or part of the steps of the foregoing embodiments may be implemented by using a computer program which may be stored in a computer readable storage medium and executed on a corresponding hardware platform (such as a system, equipment, an apparatus, a device, etc.), and when being executed, includes one or a combination of the steps of the method embodiment.

Alternatively, all or part of the steps in the above embodiments may also be implemented by using integrated circuits. These steps may be separately manufactured as one integrated circuit module or multiple modules or steps in them may be made into a single integrated circuit module.

The apparatuses/functional modules/functional units in the foregoing embodiments can be implemented by universal computing devices, which can be concentrated on a single computing device or distributed on the network composed of multiple computing devices.

The apparatuses/functional modules/functional units in the foregoing embodiments may also be stored in a computer-readable storage medium if being implemented in the form of a software functional module and sold or used as an independent product. The above-mentioned computer-readable storage medium may be a read-only memory, a magnetic disk, an optical disk, or the like.

### INDUSTRIAL APPLICABILITY

According to the embodiments of the present disclosure, the control device and the controlled device are used as the converged devices of the user equipment. In this way, the communication ID of the user equipment is used as the communication identity, while the control device and the controlled device are used as the secondary indexes of the communication ID of the user equipment. Therefore, universal authentication and routing on the remote control of the controlled device are achieved through the communication network.

Moreover, the user does not need to manage and memorize the IDs of the controlled devices by uniformly using the communication ID of the user equipment for routing. The relationship between the user equipment of the user and the controlled device can be dynamically established, which brings mobility to control the applications like industrial control (Internet of Things), smart home, etc.

## Claims

1. A method for implementing application control, comprising:
establishing, by a first communication terminal, a signaling plane with a second communication terminal via a register server by using obtained media description information of a first device, wherein the first device is a control device or a controlled device; and
acquiring, by the first device, media description information of a second device via a calling process, and acquiring, by the second device, media description information of the first device via the calling process, to establish a control channel between the first device and the second device;
wherein when the first device is the control device, the second device is the controlled device; and when the first device is the controlled device, the second device is the control device.

2. The method according to claim 1, before the establishing, by the first communication terminal, the signaling plane with the second communication terminal via the register server by using the obtained media description information of the first device, the method further comprising:
when needing to establish a call control, initiating, by the first communication terminal, a query request to the first device and obtaining the media description information of the first device.

3. The method according to claim 1 or 2, wherein the establishing, by the first communication terminal, the signaling plane with the second communication terminal via the register server by using the obtained media description information of the first device, comprises:
initiating, by the first communication terminal, a call request to the second communication terminal via the register server by using the obtained media description information of the first device; and
receiving, by the first communication terminal, a call answer carrying the media description information of the second device returned from the second communication terminal via the register server.

4. The method according to claim 3, wherein the call request carries a media plane description of the first communication terminal; and the method further comprises: establishing a media plane between the first communication terminal and the second communication terminal.

5. The method according to claim 4, wherein the established media plane comprises at least one media stream.

6. The method according to claim 1 or 2, wherein a number of the first communication terminal is at least one, and accordingly, a number of the first device and a number of the second device are at least one.

7. A system for implementing application control, comprising: a first device and a second device serving as converged devices, a first communication terminal, a second communication terminal, and a register server; wherein the first device is a control device or a controlled device, when the first device is the control device, the second device is the controlled device; and when the first device is the controlled device, the second device is the control device; wherein
the first communication terminal is configured to: initiate a call request to the register server by using media description information from the first device; receive a call answer, and send media description information of the second device to the first device; and establish a signaling plane with the second communication terminal;
the second communication terminal is configured to: receive the call request sent by the first communication terminal via the register server, and send a call answer carrying the media description information of the second device to the first communication terminal via the register server; and establish the signaling plane with the first communication terminal;
the first device is configured to: send the media description information to the first communication terminal, and receive the media description information of the second device fed back by the first communication terminal; establish a control channel with the second device; control the second device when the first device is the control device; and receive control from the second device when the first device is the controlled device;
the second device is configured to: send media description information to the second communication terminal; establish the control channel with the first device; control the first device when the second device is the control device; and receive control from the first device when the second device is the controlled device; and
the register server is configured to: receive the call request, notify the second communication terminal and forward the call answer carrying the media description information of the second device from the second communication terminal to the first communication terminal.

8. The system according to claim 7, wherein the first communication terminal and the second communication terminal control the first device and the second device serving as converged devices through a control interface.

9. The system according to claim 7 or 8, wherein a number of the first communication terminal is at least one, and accordingly, a number of the first device and a number of the second device are at least one.

10. The system according to claim 7 or 8, wherein the control device is integrated with the first communication terminal or the second communication terminal in one module;
or, the control device serves as an independent module, and exists in same user equipment with the first communication terminal or the second communication terminal;
or, the control device serves as a device independent of the first communication terminal and the second communication terminal.

11. A computer-readable storage medium storing a computer-executable instruction, wherein the computer-executable instruction is configured to execute the method according to any one of claims 1 to 6.
